Europäisches Patentamt

European Patent Office

Office européen des brevets

(19)

(11) Veröffentlichungsnummer: **0 227 058**
**B1**

(12) **EUROPÄISCHE PATENTSCHRIFT**

(45) Veröffentlichungstag der Patentschrift: **06.06.90**

(21) Anmeldenummer: **86117721.0**

(22) Anmeldetag: **19.12.86**

(51) Int. Cl.⁵: **F 02 D 41/38,** F 02 D 41/40,
F 02 D 41/22

(54) **Verfahren und Schaltung zur Regelung des Spritzbeginns bei einer Verteilerpumpe für Dieselkraftstoff an einer Dieselbrennkraftmaschine.**

(30) Priorität: **20.12.85 DE 3545229**

(43) Veröffentlichungstag der Anmeldung:
**01.07.87 Patentblatt 87/27**

(45) Bekanntmachung des Hinweises auf die
Patenterteilung:
**06.06.90 Patentblatt 90/23**

(84) Benannte Vertragsstaaten:
**AT DE FR GB**

(56) Entgegenhaltungen:
**DE-A-3 419 466**
**GB-A-2 128 773**
**GB-A-2 133 185**
**GB-A-2 133 906**
**US-A-4 502 439**
**US-A-4 596 221**

(73) Patentinhaber: **AUDI AG**
**Auto-Union-Strasse 1 Postfach 220**
**D-8070 Ingolstadt (DE)**

(72) Erfinder: **Bauder, Richard, Dipl.-Ing.**
**Fellbacher Weg 12**
**D-7107 Neckarsulm (DE)**

(74) Vertreter: **Speidel, Eberhardt**
**Postfach 1320 Waldpromenade 26**
**D-8035 Gauting (DE)**

Courier Press, Leamington Spa, England.

EP 0 227 058 B1

## Beschreibung

Die Erfindung betrifft ein Verfahren und eine Schaltung zur Regelung des Spritzbeginns bei einer Verteilerpumpe für Dieselkraftstoff an einer Dieselbrennkraftmaschine nach dem Oberbegriff des Anspruchs 1.

Diesel-Motoren haben bekanntlich gegenüber Otto-Motoren den Nachteil, daß sie einen höheren Geräuschpegel entwickeln. Besonders störend ist das sogenannte "Nageln", das besonders eson nach dem Kaltstart zu hören ist. Beim Übergang von Schuboder Teillast in Vollast oder höhere Teillast, d. h. bei einer schnellen Kraftstoffmengenzugabe, tritt ebenfalls eine deutliche Überhöhung des stationären Geräuschpegels um mehrere dB (A) auf. Es ist bekannt, daß dieses sogenannte instationäre Beschleunigungsnageln durch eine kurzzeitige Spritzbeginnzurücknahme für die Kraftstoffeinspritzung deutlich reduziert werden kann.

Mit den bekannten Verfahren und Schaltungen zur Regelung des Spritzbeginns bei einer Verteilerpumpe für Dieselkraftstoff an einer Dieselbrennkraftmaschine ist eine kurzzeitige, definierte Spritzbeginn-Spätverschiebung zur Redzierung des instationären Beschleunigungsnagelns nicht möglich.

Eine bekannte Regelung des Spritzbeginns an einer Verteilerpumpe enthält einen Sollwertgeber, der in Abhängigkeit verschiedener Betriebsparameter einen Spritzbeginnsollwert zur Verfügung stellt. An einer Soll-Istwert-Vergleichseinheit wird der Spritzbeginnsollwert mit dem Istwert eines Istwertgebers verglichen und bei einer Abweichung der Differenzwert einem nachgeschalteten Regler zugeführt. Dieser Regler enthält einen Proportional- und Integralanteil, d. h. er macht sofort und ohie Zeitverzögerung einen proportionalen Sprung am Ausgang entsprechend der Größe des am Eingang anliegenden Differenzwertes und regelt zeitlich über den Integralanteil einen Differenzwert auf Null aus.

Zusätzlich ist dieser Regelung eine Steuerung überlagert, wobei der Sollwertgeber weiter mit dem Eingang einer Steuerkennfeldeinheit verbunden ist. Im Steuerkennfeld sind Spritzbeginnwerte abgespeichert, die in etwa bereits einen geeigneten Spritzbeginn für einen zugeordneten Sollwert definieren. Die Ausgänge aus der Steuerkennfeldeinheit und dem Regler werden subtrahiert und das subtrahierte Signal als Stellgröße dem Spritzversteller zugeführt. Dies bedeutet, daß zwar ein optimaler Motorbetrieb durch das Zusammenwirken der Steuerung und der Regelung erreicht wird, der Motor aber auch (nicht optimiert) nur mit den Kennfeldwerten aus der Steuerkennfeldeinheit läuft.

Bei einem schnellen Regelvorgang (Beschleunigung) wird schaltungsmäßig somit zuerst auf das Steuerkennfeld zurückgegriffen und diese dort abgespeicherten Werte stehen sofort als Stellgröße zur Verfügung. Nach dem Abgreifen des Wertes aus dem Steuerkennfeld regelt der PI-Regler den Spritzbeginn zeitlich etwas versetzt nach.

Der Spritzbeginn-Istwert wird über einen Drehzahlgeber und einen Nadelbewegungsfühler * an der Verteilerpumpe bestimmt. Bei einem möglichen Ausfall dieser Teile würde die vorstehend beschriebene Spritzbeginnregelung, insbesondere wegen des I-Anteils im Regler zu ungeeigneten Spritzbeginnstellwerten führen, so daß der Motor überhaupt nicht mehr laufen würde. Um eine solche Regelung auszuschließen und zumindest einen nicht optimierten Motorlauf sicherzustellen, ist eine Not-Umschalteinheit für diesen Fall vorgesehen, die den Regler abtrennt bzw. funktionslos macht.

Dadurch werden nur und unmittelbar die Steuerkennfeldwerte aus der Steuerkennfeldeinheit als Stellgrößen verwendet, was zur oben bereits erwähnten (nicht optimierten) Sicherstellung eines Motorlaufs führt. Bei der bekannten Schaltung wird somit das Steuerkennfeld auch als Notfunktionsfeld benutzt. Dies bedeutet, daß mit dem Steuerkennfeld bisheriger Art keine wesentliche Beeinflußung des Spritzbeginns im Sinne einer Spritzbeginn-Spätverschiebung zur Reduzierung des Beschleunigungsnagelns vorgenommen werden kann, da bei der Not-Umschaltung ein zumindest begrenzter Fahrbetrieb über das Steuerkennfeld aufrechterhalten werden muß.

Die GB-A 21 33 185 lehrt die drehzahlabhängige Umschaltung von einem Kennfeld auf ein anderes mit Umschaltung einer Spritzbeginnregelung auf eine Spritzbeginn-Steuerung. Der Notfall wird nicht angesprochen, spezielle Spritzbeginnr-Werte sind nicht entnehmbar.

Die DE-A 34 19 466 lehrt die Umschaltung von Steuerkennfelddern für die Spritzbeginnregelung auf die Spritzbeginn-Steuerung im Notfall, wenn das Signal des Ist-Spritzbeginns einen anormalen Wert annimmt. Spezielle Steuerwerte sind nicht entnehmbar.

Aufgabe der Erfindung ist es, ein Verfahren und eine Schaltung zur Regelung des Spritzbeginns bei einer Verteilerpumpe für Dieselkraftstoff an einer Dieselbrennkraftmaschine zu schaffen, womit eine kurzzeitige, definierte Spritzbeginn-Spätverschiebung zur Reduzierung des instationären Beschleunigungsnagelns möglich ist.

Diese Aufgabe wird bei einem gattungsgemäßen Verfahren mit den kennzeichnenden Merkmalen des Anspruchs 1 und bei einer gattungsgemäßen Schaltung mit den kennzeichnenden Merkmalen des Anspruchs 2 gelöst.

Nach Anspruch 1 werden verfahrensgemäß die Steuerkennfeldwerte im Spritzbeginn so spät gelegt, bzw. die Spritzbeginne, die sich aus dem Steuerkennfeld ergeben, so spät und nahe an den oberen Totpunkt (OT) gelegt, daß sich bei instationären Vorgängen deutliche Akustikverbesserungen durch Reduzierung des.

---

* Bewegungsfühler für die Einspritzventil-Nadel Beschleunigungsnagelns ergeben, da diese späten Steuerkennfeldwerte sofort als Stellwerte anliegen und erst anschließend von der Regelung ausgeregelt werden.

Beim Ansprechen der Not-Umschalteinheit, z. B. bei Ausfall des Nadelbewegungsfühlers, wird ein für einen eingeschränkten Fahrzeugbetrieb erforderliches Notsteuerkennfeld mit früheren Spritzbeginnen dadurch zur Verfügung gestellt, daß zu den o. g. Steuerkennfeldwerten konstante Korrekturwerte addiert werden. Eine noch bessere Anpassung an einen Notbetrieb wird dann erreicht, wenn nicht nur ein konstanter Korrekturwert, sondern in Abhängigkeit des Spritzbeginnsollwerts unterschiedliche Korrekturkennfeldwerte zu den Steuerkennfeldwerten im Sinne eines früheren Spritzbeginns addiert werden. In einer weiteren Ausführung kann das Steuerkennfeld für die späten Spritzbeginnwerte durch die Not-Umschalteinheit ganz abgetrennt werden und ein separates Notsteuerkennfeld eingeschaltet werden (das dann etwa die bisher verwendeten Steuerkennfeldwerte enthält).

Mit dem vorstehenden Verfahren wird vorteilhaft erreicht, daß eine Spritzbeginnzurücknahme bei instationären Vorgängen zur Reduzierung des Beschleunigungsnagelns erhalten wird und zugleich der bekannte und zweckmäßige Notbetrieb ebenfalls möglich ist.

In der Schaltung gemäß Anspruch 2 zur Durchführung des Verfahrens ist Not-Umschalteinheit mit einer Einheit für Notsteuerwerte verbunden, deren Ausgang dem Eingang des Spritzverstellers zugeführt ist. Dadurch werden gegenüber den Steuerkennfeldwerten für den späten Spritzbeginn andere Notsteuerkennfeldwerte für einen früheren Spritzbeginn erhalten. Somit werden auch schaltungstechnisch die vorstehend genannten verfahrensgemäßen Vorteile erzielt.

In einer Schaltungsausführung nach Anspruch 3 werden die Steuerkennfeldwerte weiter verwendet und diesen nach dem Ansprechen der Not-Umschalteinheit ein konstanter Wert oder veränderliche Notkennfeldwerte hinzuaddiert, um einen früheren Not-Spritzbeginn zu erhalten.

In einer anderen Schaltungsausführung nach Anspruch 4 wird bei Ansprechen der Not-Umschalteinheit zusätzlich zu der Regelung auch die Steuerkennfeldeinheit abgetrennt und ein selbständiges Notsteuerkennfeld mit früheren Spritzbeginnen eingeschaltet.

Für eine bessere Abstimmung der vorgeschlagenen späten Kennfeldwerte und der Regelung kann es je nach verwendetem Motor nach Anspruch 5 zweckmäßig sein, den Regler zusätzlich mit einem Differential-Anteil (D-Anteil) zu versehen.

Die gesamte Regelung und Steuerung einer Verteilerpumpe für Dieselkraftstoff umfaßt bekanntlich weitere Schaltungsteile, insbesondere eine Schaltung für die Mengenbestimmung, die jedoch durch die vorliegende Erfindung nicht unmittelbar berührt werden.

Anhand eines Ausführungsbeispiels wird die Erfindung mit weiteren Vorteilen näher erläutert.

Die einzige Figur zeigt ein schematisches Schaltdiagramm für die Regelung des Spritzbeginns bei einer Verteilerpumpe für Dieselkraftstoff.

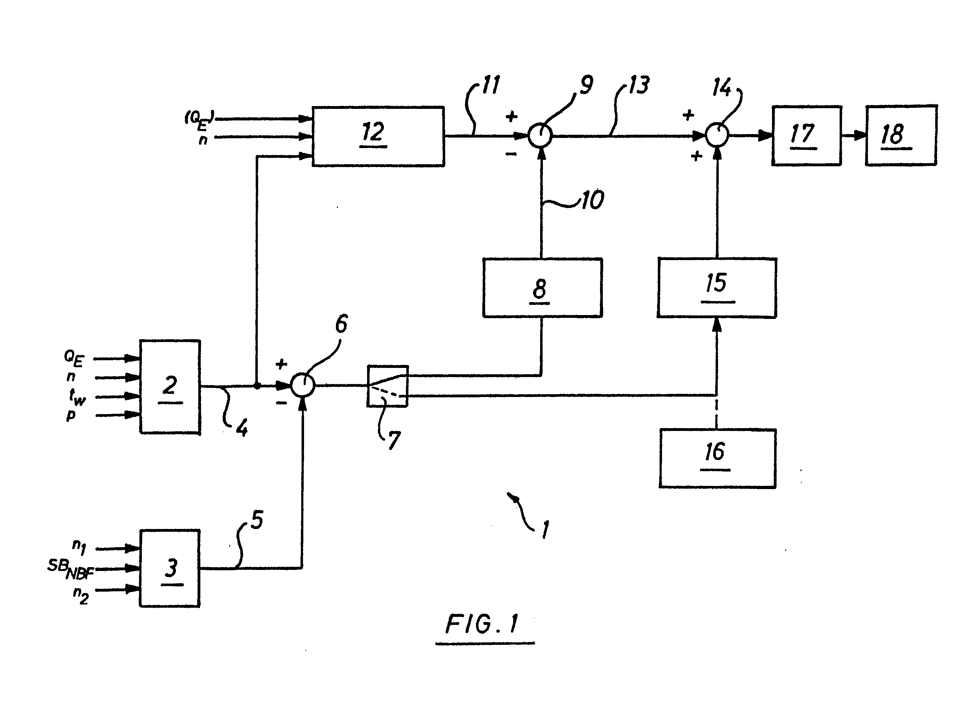

In Fig. 1 ist ein Schaltungsdiagramm 1 für eine Regelung des Spritzbeginns bei einer Verteilerpumpe für Dieselkraftstoff dargestellt. Ein Sollwertgeber 2 ermittelt den Sollwert für den Spritzbeginn aufgrund einer Reihe von Eingangsparametern, die als Eingangspfeile dargestellt sind, wobei $Q_E$ die Menge, n die Drehzahl, $t_w$ die Wassertemperatur und p den Druck im Saugrohr darstellen sollen.

Ein Istwertgeber 3 berechnet den Istwert des Spritzbeginns aus der Drehzahl $n_1$ im Zustand eins, der Drehzahl $n_2$ im Zustand zwei und einem Signal eines (nicht dargestellten) Nadelbewegungsfühlers am Düsenhalter der Verteilerpumpe. Die drei Eingangsgrößen für den Istwertgeber sind ebenfalls als Pfeile dargestellt. Der Ausgang 4 des Sollwertgebers 2 und der Ausgang 5 des Istwertgebers 3 werden einer Soll-Istwert-Vergleichseinheit 6 zugeführt, die schematisch als Kreis dargestellt ist. Der Ausgang der Soll-Istwert-Vergleichseinheit 6 ist mit einer Not-Umschalteinheit 7 verbunden, die beispielsweise auf einen Ausfall des Nadelbewegungsfühlers reagiert. Bei einem ungestörten Betrieb ist die Soll-Istwert-Vergleichseinheit 6 über die Not-Umschalteinheit 7 mit einem PI-Regler 8 eingangsseitig verbunden. Am Ausgang des PI-Reglers 8 liegt ein Signalverknüpfungspunkt 9, an dem im wesentlichen der Ausgang 10 des PI-Reglers 8 und der Ausgang 11 einer Steuerkennfeldeinheit 12 verglichen werden und das Differenzsignal auf der Leitung 13 weitergegeben wird.

Die Steuerkennfeldeinheit 12 ist eingangsseitig mit dem Ausgang 4 des Sollwertgebers 2 verbunden und kann je nach Ausführung zusätzlich eingangsseitig mit einem Drehzahleingang n und einem Mengeneingang $Q_E$ versehen sein.

Die Leitung 13 führt zu einem weiteren Signalverknüpfungspunkt 14, der zusätzlich mit einer Korrekturkennfeldeinheit 15 Verbindung hat. Die Korrekturkennfeldeinheit 15 ist eingangsseitig mit der Not-Umschalteinheit 7 verbunden (und kann auch mit einer Diagnoseanzeige 16 verbunden werden). Am Signalverknüpfungspunkt 14 werden das Differenzsignal der Leitung 13 und der Ausgang der Korrekturkennfeldeinheit im wesentlichen addiert. Wenn die Not-Umschalteinheit 7 nicht umgeschaltet hat, wird dagegen das Signal auf der Leitung 13 unverändert als Stellgrößensignal bzw. als Tastverhältnis einem Magnetventil zugeführt (angedeutet mit Kästchen 17) was wiederum die Stellgröße für die eigentliche Spritzverstellung über einen Verteilerkolben liefert (schematisch dargestellt durch Kästchen 18).

Die dargestellte Schaltungsanordnung hat folgende Funktion:

Der Sollwertgeber 2 berechnet in Abhängigkeit der Menge, Drehzahl, Wassertemperatur und des Saugrohrdrucks den für den Spritzbeginn geeigneten Sollwert und gibt einen entsprechenden Wert auf der Leitung 4 ab. Bei einer Laständerung steht ein geänderter Sollwert ohne nennenswerte Verzögerung auf der Leitung 4 an. Eine solche Änderung wird auch verzögerungsfrei der Steuerkennfeldeinheit 12 zugeführt, die ihrerseits sofort am Ausgang 11 einen entsprechend geänderten Wert zur Verfügung stellt. Der PI-Regler 8 dagegen arbeitet langsamer und im ungestörten Betrieb werden keine Werte aus der Korrekturkennfeldeinheit 15 abgegeben, so daß ein geändertes Stellsignal, dessen Änderung im wesentlichen durch die Steuerkennfeldeinheit 12 erfolgt, als Tastverhältnis des Magnetventils 17 dem Spritzversteller 18 zugeführt wird. Erfindungsgemäß sollen die Steuerkennfeldwerte im Spritzbeginn relativ spät gelegt sein, so daß eine kurzzeitige definierte Spritzbeginn-Spätverschiebung gegenüber bekannten Regelungen erfolgt.

Der vorstehend beschriebenen schnellen Steuerung durch die Steuerkennfeldeinheit 12 ist die Regelung überlagert, die zeitlich versetzt Abweichungen von Soll- und Istwert, die an der Soll-Istwert-Vergleichseinheit 6 auftreten, ausregelt. Dazu wird am Signalverknüpfungspunkt 9 das Signal aus der Steuerkennfeldeinheit 12 und dem PI-Regler 8 addiert (bzw. subtrahiert). Das ausgeregelte Signal entspricht dann dem optimalen Spritzbeginn bei den (geänderten neuen) Lastgegebenheiten.

Wenn die Not-Umschalteinheit 7 anspricht, wird der PI-Regler 8 abgetrennt (angedeutet durch strichlierte Linie im Kästchen der Not-Umschalteinheit 7) und dadurch die Soll-Istwert-Vergleichseinheit 6 mit der Korrekturkennfeldeinheit 15 verbunden. Über den Signalverknüpfungspunkt 14 werden kann den Steuerkennfeldwerten weitere gespeicherte Werte aus der Korrekturkennfeldeinheit 15 addiert, um die für eine Reduzierung des Beschleunigungsnagelns durchgeführte Spritzbeginn-Spätverschiebung wieder auszugleichen.

Das wesentliche an der Erfindung ist, daß die späten Steuerkennfeldwerte beim Ansprechen der Not-Umschalteinheit im Sinne eines früheren Spritzbeginns für den Notbetrieb durch das Zuschalten von Korrekturwerten geändert werden. Es ist daher ohne weiteres zu erkennen, daß in Abwandlung des vorstehend beschriebenen Schaltdiagramms durch die Notumschalteinheit 7 sowohl die Steuerkennfeldeinheit 12 als auch der PI-Regler 8 abgetrennt werden könnte, wobei dann die Korrekturkennfeldeinheit 15 die gesammten Notkennfeldwerte eigenständig liefern müßte. In einer weiteren Ausführungsform könnte bei Notfunktion die Korrekturkennfeldeinheit 15 unmittelbar mit dem Ausgang des Sollwertgebers 2 (und nicht erst hinter der Soll-Istwert-Vergleichseinheit 6) verbunden sein. Eine Korrektur im Sinne eines früheren Spritzbeginns könnte bei einer weiter geänderten Ausführung zweckmäßig auch bereits am Eingang der Steuerkennfeldeinheit 12 dadurch durchgeführt werden, daß der eingangsseitige Sollwert durch eine (mit anderen Daten belegte) Korrekturkennfeldeinheit bereits verändert wird.

Zusammenfassend wird festgestellt, daß mit der erfindungsgemäßen Spritzbeginnregelung das Beschleunigungsnageln deutlich reduziert werden kann und zugleich ein begrenzter Fahrbetrieb in bekannter Weise aufrechterhaltbar ist.

**Patentansprüche**

1. Verfahren zur Regelung des Spritzbeginns bei einer Verteilerpumpe für Dieselkraftstoff an einer Dieselbrennkraftmaschine, mit

einer Regelung für den Spritzbeginn, bestehend aus einem Sollwertgeber (2), der in Abhängigkeit verschiedener Betriebsparameter einen Spritzbeginnsollwert zur Verfügung stellt, einem Istwertgeber (3), der ein Signal des Ist-Spritzbeginns abgibt, einem Soll-Istwert-Vergleicher (6) und einen diesem nachgeschalteten Regler (8) mit Proportional- und Integralanteil (PI-Regler),

einer der Regelung überlagerten Steuerung, wobei der Sollwertgeber (2) mit dem Eingang einer Steuerkennfeldeinheit (12) verbunden ist und die summierten Ausgangssignale der Steuerkennfeldeinheit (12) und des Reglers (8) als Stellgröße der Spritzverstelleinheit (17, 18) zugeführt sind, und

einer Not-Umschalteinheit (7) für eine Notfunktion, die den Regler (8) abtrennt und funktionslos macht, dadurch gekennzeichnet,

daß die Steuerkennfeldwerte im Spritzbeginn so spät gelegt sind, bzw. die Spritzbeginne, die sich aus dem Steuerkennfeld ergeben, so spät und nahe am oberen Totpunkt (OT) liegen, daß sich bei instationären Vorgängen deutliche Akustikverbesserungen durch Reduzierung des Beschleunigungsnagelns insbesondere beim Beschleunigen aus dem Schubbetrieb ergeben, und

daß beim Ansprechen der Not-Umschalteinheit (7) für den Fahrzeugbetrieb in dieser Situation eine Umschaltung auf frühere Spritzbeginne dadurch erhalten wird, daß zu den Steuerkennfeldwerten konstante Korrekturwerte und/oder Korrekturkennfeldwerte addiert werden oder eine Umschaltung vom Steuerkennfeld auf ein eigenes Notsteuerkennfeld erfolgt.

2. Schaltung zur Regelung des Spritzbeginns bei einer Verteilerpumpe für Dieselkraftstoff an einer Dieselbrennkraftmaschine zur Durchführung des Verfahrens nach Anspruch 1, mit

einem Sollwertgeber (2) für den Spritzbeginn, einem Istwertgeber (3), der ein Signal des Ist-Spritzbeginns abgibt, und einer Soll-Istwert-Vergleichseinheit (6)

einem der Soll-Istwert-Vergleichseinheit (6) nachgeschalteten Regler (8), der mindestens einen PI-Anteil enthält, und ein Spritzbeginn-Stellsignal abgibt,

einer Not-Umschalteinheit (7) zur Abtrennung des Reglers,

und einer Steuerkennfeldeinheit (12), die eingangsseitig mit dem Sollwertgeber (2) und ausgangsseitig mit dem Reglerausgang (1D) verbunden ist, wobei dieser Verknüpfungspunkt (9) mit dem Spritzversteller (17, 18) Verbindung hat, dadurch gekennzeichnet, daß im Betrieb mit einem Regler (8) für den Spritzbeginn der Sollwert nahe dem oberen Totpunkt (OT) liegt, und daß die Not-Umschalteinheit (7) mit einer Einheit (15) für Notsteuerwerte verbunden ist, deren Ausgang das Spritzbeginn-Stellsignal zu früheren Spritzbeginnen hin verändert, wobei zu den Sollwerten des Sollwertgebers (2) konstante Korrekturwerte und/oder Korrekturkennfeldwerte addiert werden oder eine Umschaltung auf ein eigenes Notsteuerkennfeld erfolgt.

3. Schaltung nach Anspruch 2, dadurch gekennzeichnet, daß die Einheit für Notsteuerwerte (15) einen konstanten Wert oder einen in Abhängigkeit des Eingangswertes veränderlichen Notsteuerkennfeldwert am Ausgang abgibt und dieser Ausgang mit einem Verknüfungspunkt (14) hinter der Steuerkennfeldeinheit (12) verbunden ist.

4. Schaltung nach Anspruch 2, dadurch gekennzeichnet, daß die Not-Umschalteinheit (7) auch mit der Steuerkennfeldeinheit (12) zu deren Abtrennung verbunden ist und die Notsteuerwerte ein eigenes Notsteuerkennfeld darstellen.

5. Schaltung nach einem der Ansprüche 1 bis 4, dadurch gekennzeichnet, daß der Regler (8) einen PID-Anteil enthält.

**Revendications**

1. Procédé pour le réglage du début de l'injection pour une pompe de distribution de carburant Diesel sur un moteur Diesel, comprenant

un système de réglage du début d'injection composé d'un ajusteur de valeur de consigne (2) qui fournit une valeur de consigne de début d'injection en fonction de différents paramètres de service, d'un capteur de valeur effective (3) qui délivre un signal de début d'injection réel, d'un comparateur de valeurs de consigne et de valeurs effectives (6) et d'un régulateur (8) monté en aval de ce dernier et comprenant des composantes proportionnelle et intégrale (régulateur PI),

une commande superposée au réglage, l'ajusteur de valeur de consigne (2) étant relié à l'entrée d'une unité de réseau de caractéristiques de commande (12) et les signaux de sortie totalisés de l'unité de réseau de caractéristiques de commande (12) et du régulateur (8) étant transmis en tant que variable réglante à l'unité de réglage de l'inj'ection (17, 18),

et une unité de commutation de secours (7) pour un fonctionnement de secours qui découple le régulateur (8) et le rend inefficace caractérisé en ce

que les valeurs de rèseau de caractéristiques de commande sont placées suffisamment tard au début d'injection et respectivement que les débuts d'injection résultant du réseau de caractéristiques de commande sont placés suffisamment tard et près du point mort supérieur (OT) pour obtenir, lors de processus instationnaires, de nettes améliorations acoustiques par la réduction du martèlement d'accélération, en particulier lors de l'accélération à partir du régime de poussée, et

que, lors de la réponse de l'unité de commutation de secours (7), une commutation sur des débuts d'injection avancés permettant un fonctionnement du véhicule dans cette situation est obtenue par le fait que des valeurs de correction constantes et/ou des valeurs de réseau de caractéristiques de correction sont additionnées aux valeurs de réseau de caractéristiques de commande ou qu'il se produit une commutation du réseau de caractéristiques de commande sur un réseau de caractéristiques de commande de secours particulier.

2. Montage pour le réglage du début d'injection pour une pompe de distribution de carburant Diesel sur un moteur Diesel pour la mise en oeuvre du procédé selon la revendication 1, comprenant

un, ajusteur de valeur de consigne (2) pour le début d'injection, un capteur de valeur effective (3) qui délivre un signal de début d'injection réel, et une unité de comparaison des valeurs de consignes avec les valeurs réelles (6),

un régulateur (8) monté en aval de l'unité de comparaison des valeurs de consigne avec les valeurs réelles (6), qui comprend au moins une composante pl et délivre un signal de réglage de début d'injection.

une unité de commutation de secours (7) pour le découplage du régulateur, et

une unité de réseau de caractéristiques de commande (12) dont l'entrée est reliée à l'ajusteur de valeur de consigne (2) et dont la sortie est reliée à la sortie du régulateur (10), ce point d'interconnexion (9) ayant une liaison avec le régulateur d'injection (17, 18),

caractérisé en ce que, en service avec un régulateur (8) pour le début de l'injection, la valeur de consigne se situe à proximité du point mort supérieur (OT), et que l'unité de commutation de secours (7) est reliée à une unité (15) pour les valeurs de commande de secours dont la sortie modifie le signal de réglage du début d'injection en direction des débuts d'injection avancés, des valeurs de correction constantes et/ou des valeurs de réseau de caractéristiques de correction étant additionnées aux valeurs de consigne de l'ajusteur de valeur de consigne (2) ou une commutation étant effectuée sur un réseau de caractéristiques de commande de secours particulier.

3. Montage selon la revendication 2, caractérisé en ce que l'unité (15) pour les valeurs de commande de secours fournit à la sortie une valeur constante ou une valeur de réseau de caractéristiques de commande de secours variable en fonction de la valeur d'entrée, et que cette sortie est reliée à un point d'interconnexion (14) en aval de l'unité de réseau de caractéristiques de commande (12).

4. Montage selon la revendication 2, caractérisé en ce que l'unité de commutation de secours (7) est également reliée à l'unité de réseau de caractéristiques de commande (12) pour le découplage de celle-ci, et que les valeurs de commande de secours représentent un réseau de caractéristiques de commande de secours particulier.

5. Montage selon l'une des revendications 1 à 4, caractérisé en ce que le régulateur (8) comprend une composante PID.

**Claims**

1. A method for controlling the beginning of injection of a distributor injection pump for diesel fuel at a Diesel engine, with
a closed loop control for the beginning of injection comprising a reference element (2) which provides a signal of the nominal value of the beginning of injection in dependence on various operation parameters, an actual value indicator (3) which provides a signal of the actual beginning of injection, a comparator (6) for comparing the nominal value with the actual value, and a controller (8) with proportional and integral portion (PI-controller),
an open loop control superposing the closed loop control whereby the reference element (2) is connected to the input of a characteristic field unit (12) of the open loop control and the summed up output signals of the characteristic field unit (12) and of the controller (8) are supplied as adjusting values to the injection timing unit (17, 18), and
an emergency switch-over unit (7) for an emergency function which cuts-off the controller (8) and renders it inoperative, characterized in
that the values of the characteristic field are placed with respect to the beginning of injection so late or the beginnings of injection which result from the characteristic field are so late and close to the top dead centre (TDC) that at instationary operations distinct acoustical improvements are obtained by reducing the acceleration knock especially at acceleration from coasting, and
that for the operation of the vehicle in case the emergency switch-over unit (7) has been actuated a switch-over towards earlier beginnings of injection is obtained in that constant correction values and/or correction values of a characteristic field are added to the values of the characteristic field of the open loop control, or a switch-over from the characteristic field of the open loop control to a separate emergency characteristic field takes place.

2. A circuit for controlling the beginning of injection of a distributor injection, pump for Diesel fuel at a Diesel engine for performing the method according to claim 1, with
- a reference element (2) for the nominal beginning of injecton, an actual value indicator (3) which delivers a signal of the actual beginning of injection, and a comparator (6) for comparing the nominal value with the actual value,
- a controller (8) in series with the comparator (6) and comprising at least a P1 portion and delivering an adjusting value for the beginning of injection,
- an emergency switch-over unit (7) for cutting off the controller, and
- a characteristic field unit (12) whose input is connected to the reference element (2) and whose output is connected to the output (10) of the controller whereby this connection point is connected to the injection timing unit (17, 18), characterized in that with an operation with a controller (8) for the beginning of injection the actual value is close to the top dead centre (TDC) and that the emergency switch-over unit (7) is connected to a unit (15) for emergency control values the output of which unit changes the adjusting signal for the beginning of injection towards earlier beginnings of injection, whereby constant correction values and/or correction values of a characteristic field are added to the nominal values of the reference element (2) or a switch-over to a separate emergency characteristic field takes place.

3. Circuit according to claim 2, characterized in that the unit for emergency control values (15) delivers at its output a constant value or an emergency characteristic field value variable in dependence on the input value, and that this output is connected to a connection point (14) behind the characteristic field unit (12) of the open loop control.

4. Circuit according to claim 2, characterized in that the emergency switch-over unit (7) is also connected to the characteristic field unit (12) of the open loop control for cutting it off, and that the emergency control values constitute a separate emergency characteristic field.

5. Circuit according to any of claims 1 to 4, characterized in that the controller (8) contains a PID-portion.

FIG.1